# EUROPÄISCHE PATENTSCHRIFT

(11) **EP 3 681 142 B1**
(45) Veröffentlichungstag und Bekanntmachung des Hinweises auf die Patenterteilung: **08.09.2021**
(21) Anmeldenummer: 19151569.1
(22) Anmeldetag: 14.01.2019
(51) Int. Cl.: H04N 1/60, G06T 15/06

(54) **VERFAHREN ZUR ABSCHÄTZUNG EINES ZU ERWARTENDEN SPEKTRALEN REFLEXIONSWERTES EINES SCHICHTSYSTEMS**
METHOD FOR ESTIMATING AN EXPECTED SPECTRAL REFLECTION VALUE OF A LAYER SYSTEM
PROCÉDÉ D'ÉVALUATION D'UNE VALEUR DE RÉFLEXION SPECTRALE ATTENDUE D'UN SYSTÈME DE REVÊTEMENT

(43) Veröffentlichungstag der Anmeldung: 15.07.2020
(73) Patentinhaber: GMG GmbH & Co. KG, 72072 Tübingen (DE)
(72) Erfinder: Hoffstadt, Johannes, 89077 Ulm (DE)
(74) Vertreter: Rausch, Michael

(56) Entgegenhaltungen:
- EP-A1- 1 227 659
- EP-A1- 3 418 978
- CN-A- 104 574 492
- DE-T2- 69 808 062
- JP-B2- 3 416 221
- CRAIG DONNER ET AL: "Light diffusion in multi-layered translucent materials", 20050701; 20050731 - 20050804, 1. Juli 2005 (2005-07-01), Seiten 1032-1039, XP058335299, DOI: 10.1145/1186822.1073308
- Mathieu Hébert: "Optical models for color reproduction Content", , 1 October 2013 (2013-10-01), XP055676243, Retrieved from the Internet: URL:https://pdfs.semanticscholar.org/975f/ 20cba441d7eef4ea358751360059e8807966.pdf [retrieved on 2020-03-12]

## Beschreibung

Die vorliegende Erfindung betrifft ein Verfahren zur Abschätzung eines zu erwartenden spektralen Reflexionswertes eines Schichtsystems aus einer Schichtenfolge von Materialien und Druckfarben.

Es ist bekannt, für gegebene Farbsysteme sogenannte Farbräume zu definieren, das heißt, beispielsweise bei einem CMYK-System die unterschiedlichen Überdruckkombinationen, in denen die einzelnen Farben zwischen Null und 100 % variiert werden und schichtartig übereinander gedruckt werden, vorher zu bestimmen. Weiterhin ist es bekannt, derartige Farbräume für unterschiedliche Drucksysteme beziehungsweise Druckmaschinen, Digitaldrucker und dergleichen zu bestimmen. Üblicherweise werden die entsprechenden Farbkombinationen gedruckt und mit einem Spektrometer vermessen.

Auch ist es bekannt, entsprechende Farbräume zu transferieren und dabei beispielsweise Einflüsse von Druckträgern und dergleichen einfließen zu lassen.

Insbesondere im Bereich der Verpackungsindustrie ist es inzwischen üblich, mehr als nur drei oder vier Basisfarben zu verwenden. Im Gegenteil werden eine große Anzahl von Farben verwendet und gewünschte Druckbilder müssen gedruckt und hinsichtlich ihrer tatsächlichen Erscheinung geprüft werden.

EP1227659A1 und DE69808062T offenbaren Verfahren zur Berechnung voraussichtlicher Farberscheinung von übereinander gedruckten Farben anhand von Messwerten und Standardformeln. EP3418978A1 offenbart ein Verfahren zur Visualisierung eines dreidimensionalen Objekts mit bekannten optischen Eigenschaften anhand der Verfolgung von Lichtstrahlen.

Ausgehend vom vorbeschriebenen Stand der Technik liegt der folgenden Erfindung die **AUFGABE** zugrunde, ein Verfahren zur Abschätzung eines zu erwartenden spektralen Reflexionswertes eines Schichtsystems aus einer Schichtenfolge von Materialien und Druckfarben bereitzustellen, welches eine verlässliche Vorhersage über die Erscheinung des gewünschten Druckes trifft.

Derartige Schichtenfolgen von Materialien und Druckfarben umfassen in der Regel einen Druckträger, beispielsweise Papier, Kunststofffolie, Aluminiumfolie und dergleichen, darauf aufgebrachte Druckfarben und häufig eine obere Schutzfolienabdeckung. Alternativ werden auch transparente Folien rückseitig mit einer Vielzahl von Farben bedruckt, wodurch auch eine Schutzwirkung für die Farbschicht etwa im Verpackungsdruck entsteht.

Je größer die Anzahl der Farben ist, desto unklarer ist das zu erwartende Erscheinungsbild. Dieses wird durch den sogenannten spektralen Reflexionswert repräsentiert.

Zur technischen **LÖSUNG** der genannten Aufgabe wird ein Verfahren mit den Merkmalen des Anspruchs 1 vorgeschlagen. Weitere Vorteile und Merkmale ergeben sich aus den Unteransprüchen.

Gemäß der Erfindung wird zunächst für jede einzelne Schicht bestimmt, welche spektrale Transmission und Reflexion an den Grenzflächen erfolgt, und wie das in das Schichtvolumen eintretende Licht jeweils absorbiert oder gestreut wird. Genauer gesagt wird das Verhalten an der Grenzfläche gemäß der optischen Gesetze durch den Brechungsindex der Schicht relativ zu dem der benachbarten Schicht sowie den Winkel des Lichtstrahls zur Grenzfläche beschrieben, und Absorption und Streuung im Volumen werden z. B. verursacht durch Farbpigmente einer Druckfarbschicht, aber auch durch Weißpigmente, Füllstoffe oder auch Papierfasern der Druckträgerschicht.

Aus den vorbestimmten Werten wird dann für die Schichtenfolge durch Verfolgung der unterschiedlichen Lichtwege in einem sequentiellen Verlauf durch die Schichten ein resultierender spektraler Gesamt-Reflexionswert ermittelt.

Es wird also davon ausgegangen, dass ein Lichtstrahl, der unter einem bestimmten Winkel auf eine hinsichtlich Transmission, Reflexion, Absorption und Streuung bekannte Schicht trifft, sich aufteilt, indem ein Teil in die vorige Schicht zurück reflektiert wird, und der Rest eintreten kann. Dieser eintretende Anteil wird dabei gebrochen und im Inneren des Volumens wieder aufgeteilt: in einen Anteil der teilweise absorbiert wird, in einen Anteil der teilweise durch Streuung umgeleitet wird, und den Rest, der den unteren Rand der Schicht erreicht. Dieser bestimmte Anteil trifft dort auf die nächste Schicht, für die dann die gleichen Betrachtungen vorgenommen werden, bis ein Teil des Lichtstrahls die unterste Schicht erreicht.

Gemäß einem vorteilhaften Vorschlag der Erfindung wird zu Zwecken der Messungen eine weiße beziehungsweise eine schwarze Unterlage unter die unterste Schicht positioniert.

Wird die Messung einerseits mit einer weißen, andererseits mit einer schwarzen Unterlage vorgenommen, so hat man aufgrund der definierten Reflexion der weißen beziehungsweise der definierten Absorption der schwarzen Unterlage sehr konkrete aussagekräftige Werte für die darüber liegende Schicht beziehungsweise Schichten.

Der durch die Schichten durchgewanderte Lichtstrahl wird reflektiert und wandert in gleicher Weise von der untersten Schicht bis zum Austritt aus der obersten Schicht. Dieser resultierende Reflexionswert stellt dann den Wert für die anzunehmende spektrale Erscheinung des Schichtsystems dar.

Weil man die gedruckten Farbschichten in der Regel nicht einzeln isolieren und dann analysieren kann, muss man sie in Verbindung mit dem Druckträger verwenden. In vorteilhafter Weise bestimmt man zuerst die Eigenschaften des unbedruckten Druckträgers, der ein Ein-Schichten-System darstellt. Hier kann häufig für Transmission und Reflexion der zugrundeliegende Brechungsindex als Materialkonstante aus der Literatur entnommen werden; die Absorption und die Streuung können auf der Basis spektraler Reflexionsmessungen des Trägers auf bekannter weißer und schwarzer Unterlage ermittelt werden. Diese Werte werden jeweils in Abhängigkeit von der Wellenlänge λ ermittelt. Beispielsweise ist der Literaturwert des Brechungsindex 1.5 für den komplex aufgebauten Druckträger Papier.

Anschließend betrachtet man das Zwei-Schichten-System aus Druckträger und einer einzelnen Farbe. Weil die Parameter der Trägerschicht bereits bekannt sind, sind nun nur die Parameter der Farbschicht zu bestimmen. Dazu dienen wieder Literaturwerte soweit vorhanden, sowie spektrale Reflexionsmessungen. In vorteilhafter Weise werden die Parameter ausgehend von Schätzwerten iterativ bestimmt, indem mit den geschätzten Parameterwerten der Gesamt-Reflexionswert des Zwei-Schichten-Systems errechnet wird und mit der Messung verglichen wird, und die Parameter auf Basis der Abweichungen angepasst werden. Das wird für jede Druckfarbe einzeln durchgeführt.

Besonders einfach ist der häufige Fall im Verpackungsdruck, wenn als Druckträger eine klare transparente Folie verwendet wird, die praktisch weder Absorption noch Streuung hat. Wird dann in einem nächsten Schritt eine erste Farbschicht zusammen mit der Folie verwendet, kann man die Werte der Transmission und der Reflexion, der Absorption und Streuung in dieser Farbschicht besonders leicht feststellen.

In vorteilhafter Weise werden eingeschlossene Luftschichten genauso berücksichtigt (mit Brechungsindex 1, Absorption und Streuung 0), insbesondere beim Auflegen von Foliendrucken auf die Messunterlage. Alternativ kann beim Auflegen auf die Messunterlage diese Luftschicht und damit ihr Einfluss auf die Messung entfernt werden oder ersetzt werden durch eine Füllsubstanz in optischem Kontakt, wie klares Öl mit bekanntem Brechungsindex, der viel näher an den Brechungsindizes von Folie und Unterlage liegt und damit die zusätzlichen Reflexionen an Grenzflächen minimiert.

Bei völlig opaken Trägern wie etwa Aluminiumfolie spielt die Messunterlage keine Rolle mehr. Die Messungen auf weiß und schwarz würden sich nicht unterscheiden, daher ist es nicht möglich, die zwei Parameter Absorption und Streuung daraus eindeutig zu bestimmen. In diesem Fall ist die Aufteilung in Absorption und Streuung für die unterste (erstgedruckte) Farbschicht unerheblich, weil im Endergebnis wirkungsgleich, und kann beispielsweise komplett durch Absorption ohne Streuung beschreiben werden. Es wird also ein Parameter auf Null gesetzt, und es bleibt nur noch ein Parameter aus der einen Messung zu bestimmen. - Die Absorption und Streuung weiterer Farbschichten ist aber im Zusammendruck wichtig, weil eine Streuung eine obenliegende Schicht weniger transparent, also teilweise opak, macht. Hier muss das Prinzip sinngemäß fortgesetzt werden, d.h. diese Farbschichten müssen auf mindestens zwei verschiedenen Untergründen aufgebracht und vermessen werden, etwa auf dem Druckträger ohne weitere Farbe und auf dem Druckträger mit unterster Farbschicht. Die unterste Farbschicht ist oft eine weiße oder schwarze Druckfarbe, was die Berechnung erleichtert. Aber im Allgemeinen kann jede beliebige unterste Farbe verwendet werden, sofern sie einen Unterschied zum reinen Druckträger darstellt.

Weitere Vorteile und Merkmale der Erfindung ergeben sich aus der folgenden Beschreibung anhand der Figuren. Dabei zeigen:
- Fig. 1: Eine schematische Darstellung einer Schicht zur Erläuterung von Transmission und Reflexion;
- Fig. 2: eine Darstellung gemäß Figur 1 zur Erläuterung von Absorption und Streuung und
- Fig. 3: eine Darstellung eines Schichtsystems zur Erläuterung des erfindungsgemäßen Verfahrens.

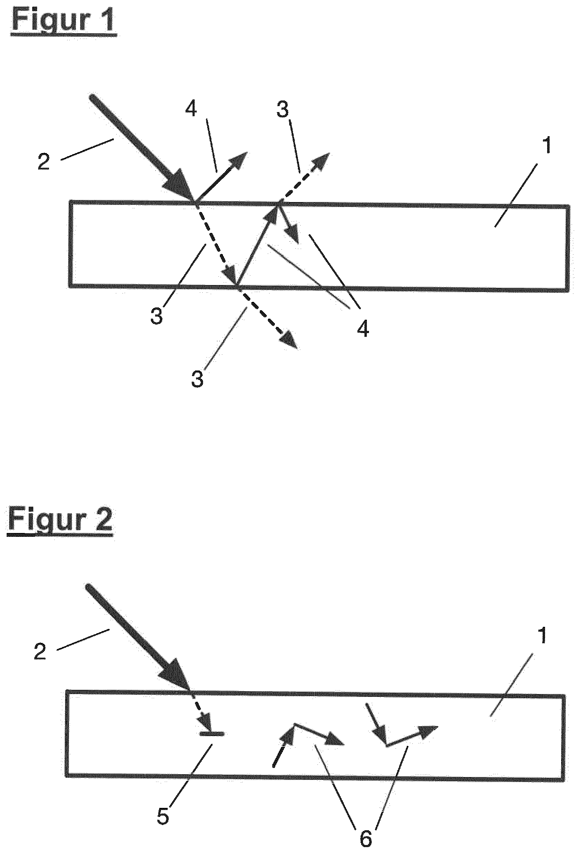

Gemäß Figur 1 wird in eine anzunehmende Schicht 1 ein Lichtstrahl 2 bekannter Wellenlänge λ gesandt. An den Grenzflächen finden Reflexionen 4 statt, restliche Lichtanteile durchdringen die Schicht und stellen die Transmission 3 dar. An einer etwaigen Unterlage wird der Lichtstrahl reflektiert und kann somit eine weitere Reflexion 4 der Schicht erfahren und eine Resttransmission 3, die weiter nach außen tritt.

Gemäß Figur 2 wird in der Schicht 1 aufgrund der Druckfarbe beziehungsweise der Pigmente von dem Licht 2 ein Teil absorbiert, was durch den Balken 5 symbolisiert wird. Ein weiterer Anteil wird innerhalb der Schicht in ihrem Volumen durch innere Reflexionen gestreut, was durch das Fallbündel 6 angedeutet ist.

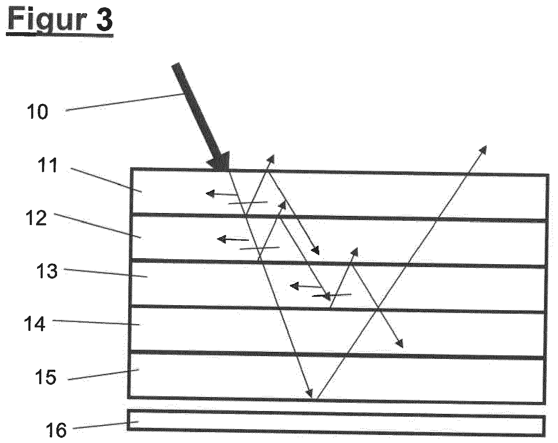

Das Zusammenwirken aller genannten Fälle in einem Schichtsystem ist in Figur 3 gezeigt. Ein Lichtstrahl 10 durchläuft im gezeigten Ausführungsbeispiel Schichten 11, 12, 13, 14, 15 und trifft auf eine Messunterlage 16.

Die Messunterlage 16 ist weiß oder schwarz.

Im gezeigten Ausführungsbeispiel sei die oberste Schicht 11 eine Folie, die Schichten 12 und 13 können Druckfarbschichten sein, die auf einer Druckfarbschicht 14 durch Überdrucken aufgebracht sind. Mit 15 ist beispielsweise ein Träger, Papier, Folie, metallische Folie, Aluminium oder dergleichen angedeutet. Zwischen 15 und Unterlage 16 ist ein Luftspalt als Teil des Schichtsystems zu erkennen.

In jeder der Schichten finden wie oben beschrieben Transmissionen, Reflexionen, Absorptionen und Streuungen statt, was durch die unterschiedlichen Pfeile angedeutet ist. Der Lichtstrahl 10 durchdringt die Folie 11 und erfährt dabei in den Grenzflächen Reflexionen. Der Rest des Lichtes tritt in die Druckfarbschicht 12 ein, wo Absorption, Streuung, Reflexion erfolgen und ein weiterer Restbestandteil des Lichtes 10 in die Schicht 13 eintritt. Dieser Vorgang wiederholt sich bis zur Reflexion des Restlichtes an der untersten weißen Messunterlage und der nach oben wandernde Lichtstrahl erfährt in jeder der Schichten die gleichen Reflexionen, Absorptionen und Streuungen, so dass schlussendlich ein verbleibender Teil austritt.

Nachdem das Verhalten jeder einzelnen Schicht in Bezug auf Transmission, Reflexion, Absorption und Streuung vorbestimmt wurde, lässt sich mit dem erfindungsgemäßen Verfahren somit der resultierende Reflexionswert ermitteln.

### Bezugszeichen

- 1: Schicht
- 2: Lichtstrahl
- 3: Transmission
- 4: Reflexion
- 5: Balken
- 6: Fallbündel
- 10: Lichtstrahl
- 11: Folie
- 12: Schicht
- 13: Schicht
- 14: Schicht
- 15: Schicht
- 16: Messunterlage

## Patentansprüche

1. Verfahren zur Abschätzung eines zu erwartenden spektralen Reflexionswertes eines Schichtsystems aus einer Schichtenfolge von Materialien und Druckfarben, wobei
a) zunächst für jede einzelne Schicht die Werte bestimmt werden für
i) die spektrale Transmission an den Grenzflächen der Schicht,
ii) die spektrale Reflexion an den Grenzflächen der Schicht,
iii) die spektrale Absorption im Schicht-Volumen und
iv) die spektrale Streuung im Schicht-Volumen,
b) aus den bestimmten Werten für die Schichtenfolge durch Verfolgung der unterschiedlichen Lichtwege in einem sequentiellen Verlauf durch die Schichten ein resultierender Reflexionswert ermittelt wird.

2. Verfahren nach Anspruch 1, **dadurch gekennzeichnet, dass** der sequentielle Verlauf durch die Schichten der theoretischen Betrachtung eines auf die Oberfläche des Schichtsystems auftreffenden Lichtstrahls und seines Verlaufes durch die Schichten und der verbleibenden Reflexion entspricht.

3. Verfahren nach einem der vorhergehenden Ansprüche, **dadurch gekennzeichnet, dass** die Transmission, Reflexion, Absorption und die Streuung jeweils in Abhängigkeit von der Wellenlänge λ ermittelt werden.

4. Verfahren nach einem der vorhergehenden Ansprüche, **dadurch gekennzeichnet, dass** die Transmission in einem Schätzverfahren angenähert wird.

5. Verfahren nach einem der vorhergehenden Ansprüche, **dadurch gekennzeichnet, dass** die Absorption gemessen wird.

6. Verfahren nach einem der vorhergehenden Ansprüche, **dadurch gekennzeichnet, dass** als oberste Schicht des Schichtsystems eine Folie angeordnet wird.

7. Verfahren nach einem der vorhergehenden Ansprüche, **dadurch gekennzeichnet, dass** während der Messungen das Schichtsystem auf weißen und/oder schwarzen Unterlagen positioniert wird.

## Claims

1. Method for estimating an expected spectral reflectance value to be expected of a layer system consisting of a layer sequence of materials and printing inks, wherein
a) firstly for each individual layer the values are determined for
i) the spectral transmission at the interfaces of the layer,
ii) the spectral reflectance at the interfaces of the layer,
iii) the spectral absorption in the layer volume, and
iv) the spectral scattering in the layer volume,
b) a resulting reflectance value is ascertained from the determined values for the layer sequence by tracing the different light paths in a special path through the layers.

2. Method according to claim 1, **characterized in that** the sequential course through the layers corresponds to the theoretical observation of a light beam impinging on the surface of the layer system and its course through the layers and the remaining reflection.

3. Method according to one of the preceding claims, **characterized in that** the transmission, reflection, absorption and scattering are each determined as a function of the wavelength λ.

4. Method according to one of the preceding claims, **characterized in that** the transmission is approximated in an estimation method.

5. Method according to one of the preceding claims, **characterized in that** the absorption is measured.

6. Method according to one of the preceding claims, **characterized in that** a foil is arranged as the uppermost layer of the layer system.

7. Method according to one of the preceding claims, **characterized in that** during the measurement the layer system is positioned on white and/or black backing.

## Revendications

1. Procédé d'estimation d'une valeur de réflectance spectrale attendue d'un système de couches constitué d'une séquence de couches de matériaux et d'encres d'impression, dans laquelle
a) tout d'abord, pour chaque couche individuelle, les valeurs sont déterminées pour
i) la transmission spectrale aux interfaces de la couche,
ii) la réflectance spectrale aux interfaces de la couche
iii) l'absorption spectrale dans le volume de la couche, et
iv) la diffusion spectrale dans le volume de la couche,
b) une valeur de réflectance résultante est déterminée à partir des valeurs déterminées pour la séquence de couches en traçant les différents faisceau lumineux dans un chemin spécifique à travers les couches.

2. Procédé selon la revendication 1, **caractérisé en ce que** le parcours séquentiel à travers les couches correspond à l'observation théorique d'un faisceau lumineux tombant sur la surface du système de couches et de son parcours à travers les couches et la réflexion restante.

3. Procédé selon l'une quelconque des revendications précédentes, **caractérisé en ce que** la transmission, la réflexion, l'absorption et la diffusion sont chacune déterminées en fonction de la longueur d'onde λ.

4. Procédé selon l'une quelconque des revendications précédentes, **caractérisé en ce que** la transmission est approchée dans un procédé d'estimation.

5. Procédé selon l'une quelconque des revendications précédentes, **caractérisé en ce que** l'absorption est mesurée.

6. Procédé selon l'une quelconque des revendications précédentes, **caractérisé en ce que** un film plastique est disposée comme couche supérieure du système de couches.

7. Procédé selon l'une des revendications précédentes, **caractérisé en ce que**, pendant la mesure, le système de couches est positionné sur un support blanc et/ou noir.
